# EUROPEAN PATENT APPLICATION

(11) **EP 3 335 966 A1**
(43) Date of publication of application: **20.06.2018**
(21) Application number: 17203478.7
(22) Date of filing: 24.11.2017
(51) Int. Cl.: B62D 7/00, G05D 1/02

(54) **OMNIDIRECTIONAL CART AND CONTROL METHOD THEREOF**

(30) Priority: 14.12.2016 JP 2016242474
(71) Applicant: TOYOTA JIDOSHA KABUSHIKI KAISHA, Toyota-shi, Aichi, 471-8571 (JP)
(72) Inventor: TERADA, Koji, Toyota-shi,, Aichi 471-8571 (JP); HIROSE, Noriaki, Nagakute-shi,, Aichi 480-1192 (JP)
(74) Representative: TBK

(57) **Abstract**

An omnidirectional cart including a cart part including a plurality of driving wheels, a body part attached to the cart part rotatably around a pivot axis, a command generation unit that generates a speed command indicating a translational speed and a rotational speed of the body part at predetermined cycles, and a control unit that searches for a predetermined number of the speed commands for maintaining the direction of the translational speed indicated by the speed command of a current step and calculates a speed command whose excess rate is less or equal to a threshold or whose excess rate is minimum among the predetermined number of the speed commands, the excess rate indicating how much values of torque and angular speeds of driven wheels and the pivot axis exceed axes limitation values when the omnidirectional cart operates in accordance with the speed command of the current step.

## Description

### BACKGROUND

The present disclosure relates to an omnidirectional cart and a control method thereof.

An active caster omnidirectional cart that can move in all directions is known. The active caster omnidirectional cart includes a cart part having a plurality of driving wheels and a body part attached to the cart rotatably around a pivot axis. For example, Japanese Unexamined Patent Application Publication No. 2007-152019 discloses an electric wheelchair including a wheel body corresponding to the above-mentioned cart part and a seating part corresponding to the above-mentioned body part.

### SUMMARY

Incidentally, when speed commands indicating translational speeds and the like of the body part are sequentially input to the omnidirectional cart, if the translational speed of the body part is high, it is necessary to perform control beyond limitations of wheel axes of driving wheels and a pivot axis. Thus, there is a possibility that the omnidirectional cart cannot move in a translational speed direction indicated by the speed command. To address this problem, the translational speed of the body part may be limited. However, by doing so, the translational speed of the body part may be reduced.

Therefore, there has been a problem in which the omnidirectional cart cannot achieve both prevention of a difference between the translational speed direction of the omnidirectional cart and the translational speed direction indicated by the speed command and an increase in the translational speed.

The present invention has been made in light of the above circumstances and provides an omnidirectional cart and a control method thereof that can achieve prevention of a difference between the translational speed direction of the omnidirectional cart and the translational speed direction indicated by the speed command and an increase in the translational speed.

In an example aspect of the present invention, an omnidirectional cart include:
a cart part including a plurality of driving wheels;
a body part attached to the cart part rotatably around a pivot axis;
a command generation unit configured to generate a speed command at predetermined cycles, the speed command indicating a translational speed and a rotational speed of the body part;
a control unit configured to, when the speed command of a current step is generated by the command generation unit, search for a predetermined number of the speed commands for maintaining a translational speed direction indicated by the generated speed command of the current step and calculate the speed command whose excess rate is a threshold or less or the speed command whose excess rate is minimum among the predetermined number of the speed commands searched for as filtered speed commands of the current step, the excess rate indicating how much values of torque and angular speeds of wheel axes of the plurality of driving wheels and the pivot axis exceed limitation values when the omnidirectional cart operates in accordance with the speed command of the current step;
a first driving unit configured to drive rotations of the wheel axes of the plurality of driving wheels independently based on the filtered speed command of the current step calculated by the control unit; and
a second driving unit configured to drive rotation of the pivot axis based on the filtered speed command of the current step calculated by the control unit.

In another example aspect of the present disclosure, a control method of an omnidirectional cart including a cart part including a plurality of driving wheels and a body part attached to the cart part rotatably around a pivot axis includes:
generating a speed command at predetermined cycles, the speed command indicating a translational speed and a rotational speed of the body part;
when the speed command of a current step is generated, searching for a predetermined number of the speed commands for maintaining a translational speed direction indicated by the generated speed command of the current step and calculating the speed command whose excess rate is a threshold or less or the speed command whose excess rate is minimum among the predetermined number of the speed commands searched for as filtered speed commands of the current step, the excess rate indicating how much values of torque and angular speeds of wheel axes of the plurality of driving wheels and the pivot axis exceed limitation values when the omnidirectional cart operates in accordance with the speed command of the current step;
driving rotations of the wheel axes of the plurality of driving wheels independently based on the calculated filtered speed command of the current step; and
driving rotation of the pivot axis based on the calculated filtered speed command of the current step.

According to the above example aspects, the omnidirectional cart can maintain, as much as possible, the translational speed direction indicated by the speed command of the current step and also operate in accordance with the speed command that takes the limitation values into consideration. Further, it is possible to minimize the reduction in the translational speed of the body part. Therefore, it is possible to provide an omnidirectional cart and a control method thereof that can achieve both prevention of a difference between the translational speed direction of the omnidirectional cart and the translational speed direction indicated by the speed command of the current step and an increase in the translational speed.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF DRAWINGS

Fig. 1 is a top view showing a schematic configuration of an omnidirectional cart according to an embodiment;
Fig. 2 is a front view showing a schematic configuration of the omnidirectional cart according to the embodiment;
Fig. 3 is a side view showing a schematic configuration of the omnidirectional cart according to the embodiment;
Fig. 4 is a block diagram showing a control block of the omnidirectional cart according to the embodiment;
Fig. 5 is a diagram showing various parameters of the omnidirectional cart according to the embodiment;
Fig. 6 is a diagram showing a method for generating a cart speed command by a command generation unit according to the embodiment;
Fig. 7 is a block diagram showing functional blocks of a control unit according to the embodiment;
Fig. 8 is a flowchart showing a processing flow of the control unit according to the embodiment;
Fig. 9 is a diagram showing specific processes of the control unit according to the embodiment;
Fig. 10 is a diagram showing specific processes of the control unit according to the embodiment;
Fig. 11 is a diagram showing specific processes of the control unit according to the embodiment;
Fig. 12 is a diagram showing specific processes of the control unit according to the embodiment;
Fig. 13 is a diagram showing specific processes of the control unit according to the embodiment; and
Fig. 14 is a diagram showing specific processes of the control unit according to the embodiment.

### DESCRIPTION OF EMBODIMENTS

Hereinafter, embodiments of the present disclosure will be described in detail with reference to the drawings. The same or corresponding elements are denoted by the same signs throughout the drawings, and repeated descriptions will be omitted as necessary.

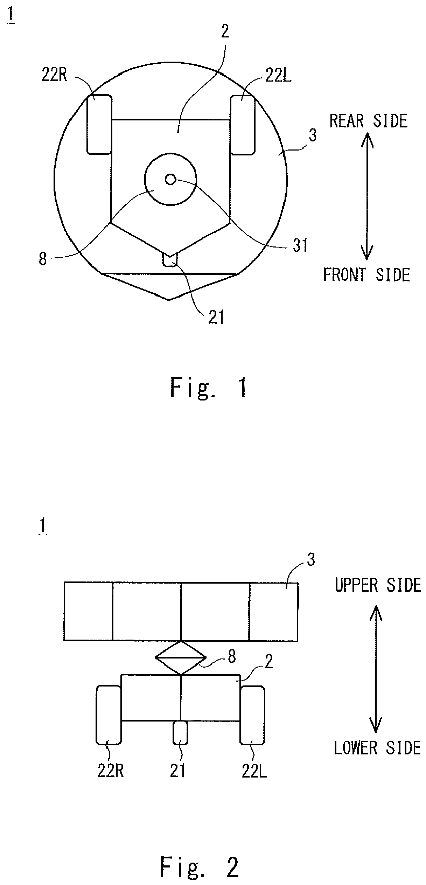

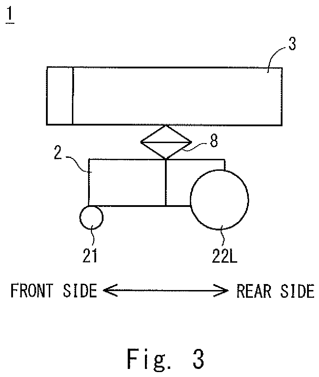

First, a schematic configuration of an omnidirectional cart 1 according to this embodiment will be described with reference to Figs. 1 to 3. Figs. 1 to 3 are diagrams showing a schematic configuration of the omnidirectional cart 1 according to this embodiment. Fig. 1 is a top view, Fig. 2 is a front view, and Fig. 3 is a side view of the omnidirectional cart 1. Note that Fig. 1 transparently shows a body part 3, which will be described later. The omnidirectional cart 1 is includes a cart part 2 and the body part 3. The omnidirectional cart 1 is implemented by, for example, an active caster omnidirectional cart.

The cart part 2 includes one caster wheel 21 and a pair of right and left driving wheels 22L and 22R, respectively. The rotations of the wheel axes of the two driving wheels 22L and 22R are driven independently by wheel actuators 7L and 7R, respectively, which will be described later. In this manner, the cart part 2 achieves movement in all directions by independently driving the rotations of the wheel axes of the two driving wheels 22L and 22R. The caster wheel 21 follows the cart part 2 in a direction in which the cart part 2 moves.

The body part 3 is attached to the cart part 2 so as to be rotatable about a pivot axis (yaw axis) 31. The rotation of the pivot axis 31 is driven by a rotation actuator 8 so that the body part 3 faces the direction in which the cart part 2 moves. The wheel axes of the driving wheels 22L and 22R are offset from (i.e., do not intersect with) the pivot axis 31 of the body part 3.

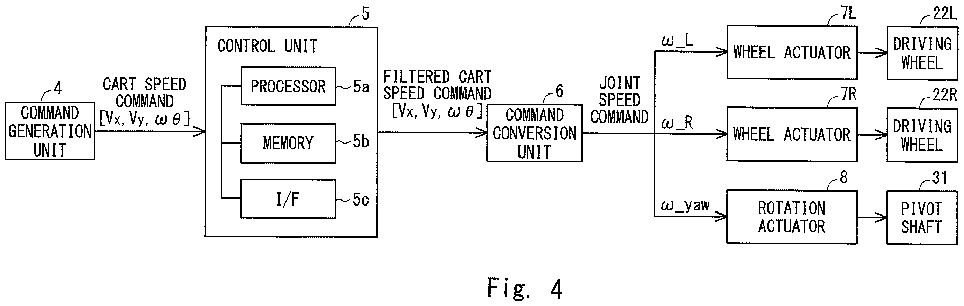

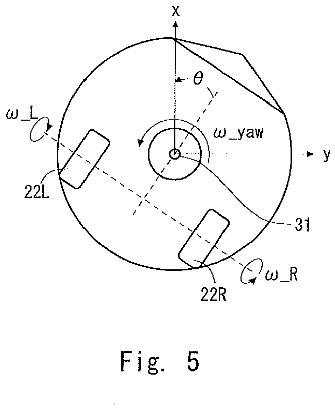

Next, a control block configuration of the omnidirectional cart 1 according to this embodiment will be described with reference to Fig. 4 and Fig. 5. Fig. 4 is a block diagram showing a control block of the omnidirectional cart 1 according to this embodiment. Fig. 5 is a diagram showing various parameters of the omnidirectional cart 1 according to this embodiment. The omnidirectional cart 1 includes a command generation unit 4, a control unit 5, a command conversion unit 6, wheel actuators 7L and 7R, and a rotation actuator 8. The wheel actuators 7L and 7R constitute a first driving unit, and the rotation actuator 8 constitutes a second driving unit.

The command generation unit 4 periodically generates a cart speed command [Vₓ, V_{y}, ω_{θ}] for the omnidirectional cart 1 to move from a current position to a target position. Here, Vₓ represents a speed in an x direction, V_{y} represents a speed in a y direction, and the combination of Vₓ and V_{y} represents a translational speed of the body part 3. Further, ω_{θ} represents a rotational speed of the body part 3.

For example, the command generation unit 4 is composed of an operation unit such as a joystick operated by the user. When the omnidirectional cart 1 is autonomously moved while avoiding obstacles or the like in an environment, the command generation unit 4 is composed of an autonomous movement module.

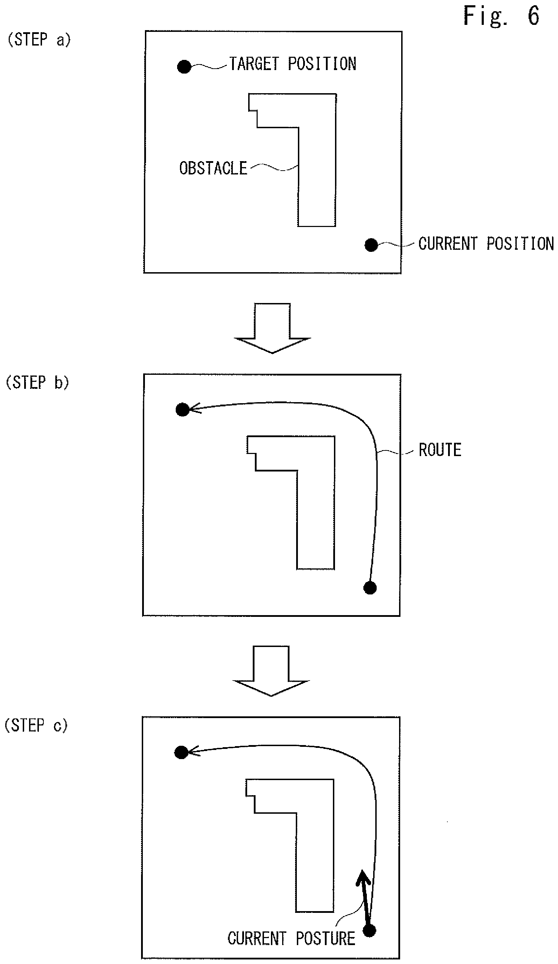

Fig. 6 is a diagram showing a method of the command generation unit 4 for generating the cart speed command when the command generation unit 4 is composed of the autonomous movement module. First, the command generation unit 4 determines a target position on a map (Step a). Next, the command generation unit 4 searches for a route in which the omnidirectional cart 1 can move while avoiding obstacles or the like from a current position on the map to the target position (Step b). Then, the command generation unit 4 generates the cart speed command along the searched route based on the current position and a posture of the omnidirectional cart 1 (Step c). After this, the command generation unit 4 periodically generates the cart speed command.

The control unit 5 calculates a filtered cart speed command of the current step based on the cart speed command of the current step generated by the command generation unit 4 and limitation values of torque and angular speeds of the wheel axes of the driving wheels 22L and 22R and the pivot axis 31.

To be more specific, firstly, the control unit 5 searches for the predetermined number of cart speed commands for maintaining the translational speed direction indicated by the cart speed command of the current step. Then, the control unit 5 calculates the following cart speed command as the filtered cart speed command of the current step. Specifically, among the predetermined number of cart speed commands that have been searched for, the cart speed command whose excess rate is a threshold (which is 1 in this embodiment) or less or the cart speed command that has the minimum excess rate is calculated as the filtered cart speed command of the current step. The excess rate indicates how much values of the torque and angular speeds of the wheel axes of the driving wheels 22L and 22R and the pivot axis 31 when the omnidirectional cart 1 operates in accordance with the cart speed command exceed the limitation values.

A hardware configuration of the control unit 5 includes, for example, a processor 5a, a memory 5b, an interface unit (I/F) 5c, and the like. The processor 5a is, for example, an arithmetic processing device such as a CPU (Central Processing Unit). The memory 5b is, for example, a memory such as a RAM (Random Access Memory) or a ROM (Read Only Memory). The memory 5b stores programs to be executed by the processor 5a. The processor 5a reads out these programs from the memory 5b and executes them. The interface unit (I/F) 5c inputs and outputs signals to and from the outside. The processor 5a, the memory 5b, and the interface unit (I/F) 5c are connected to each other via a data bus or the like. The above-mentioned programs can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The programs may be provided to a computer using any type of transitory computer readable media. Examples of transitory computer readable media include electric signals, optical signals, and electromagnetic waves. Transitory computer readable media can provide the programs to a computer via a wired communication line (e.g. electric wires, and optical fibers) or a wireless communication line.

The command conversion unit 6 converts the filtered cart speed command [Vₓ, V_{y}, ω_{θ}] of the current step calculated by the control unit 5 into a joint speed command [ω_{_}L, ω_R, ω_yaw] of the current step. Here, ω_L is the angular speed of the wheel axis of the driving wheel 22L and it is output to the wheel actuator 7L. Further, ω_R is the angular speed of the wheel axis of the driving wheel 22R and it is output to the wheel actuator 7R. Furthermore, ω_ yaw is the angular speed of the pivot axis 31 and it is output to the rotation actuator 8.

The wheel actuator 7L is coupled to the wheel axis of the driving wheel 22L, and drives the rotation of the wheel axis of the driving wheel 22L so that the angular speed of the wheel axis of the driving wheel 22L becomes ω_L of the current step. The wheel actuator 7R is coupled to the wheel axis of the driving wheel 22R, and drives the rotation of the wheel axis of the driving wheel 22R so that the angular speed of the wheel axis of the driving wheel 22R becomes ω_R of the current step. The rotation actuator 8 is coupled to the pivot axis 31, and drives the rotation of the pivot axis 31 so that the angular speed of the pivot axis 31 becomes ω_yaw of the current step.

This embodiment is characterized in the operation of the control unit 5. Thus, the operation of the control unit 5 will be mainly described below. In the following descriptions, the above-described cart speed command and the filtered cart speed command are simply referred to as a speed command and a filtered speed command, respectively.

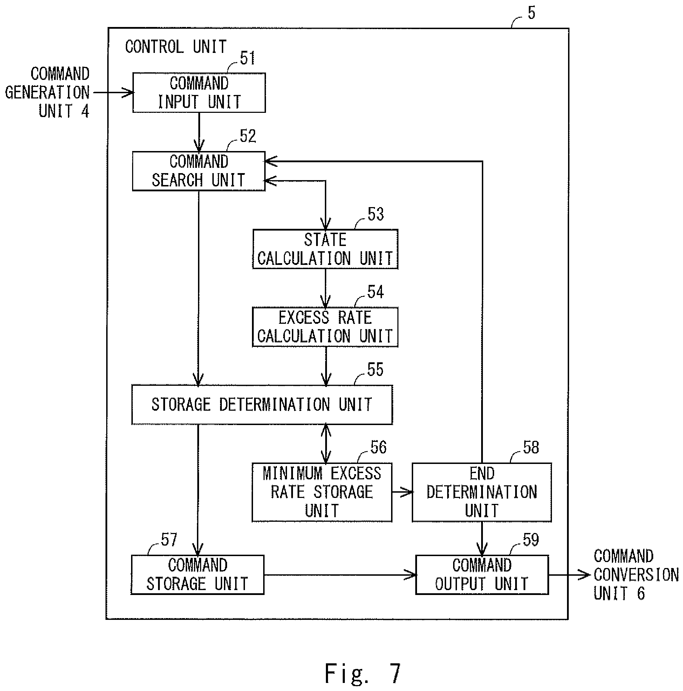

Next, a functional block configuration of the control unit 5 will be described with reference to Fig. 7. Fig. 7 is a block diagram showing functional blocks of the control unit 5. The control unit 5 includes a command input unit 51, a command search unit 52, a state calculation unit 53, an excess rate calculation unit 54, a storage determination unit 55, a minimum excess rate storage unit 56, a command storage unit 57, an end determination unit 58, and a command output unit 59. The command input unit 51 and the command output unit 59 are included in the interface unit (I/F) 5c shown in Fig. 4. Further, the command search unit 52, the state calculation unit 53, the excess rate calculation unit 54, the storage determination unit 55, and the end determination unit 58 are included in the processor 5a shown in Fig. 4. Furthermore, the minimum excess rate storage unit 56 and the command storage unit 57 are included in the memory 5b shown in Fig. 4.

The command input unit 51 inputs the speed command periodically generated by the command generation unit 4.

When the speed command of the current step is input to the command search unit 52 from the command generation unit 4, the command search unit 52 searches for the speed command for maintaining the translational speed direction indicated by the input speed command of the current step.

The state calculation unit 53 calculates the torque and angular speeds of the wheel axes of the driving wheels 22L and 22R and the pivot axis 31 of the body part 3 when the omnidirectional cart 1 operates in accordance with the speed command searched by the command search unit 52. At this time, the state calculation unit 53 may perform the above calculation in consideration of the filtered speed command of the previous step, the weight of the omnidirectional cart 1, and the like.

The excess rate calculation unit 54 calculates the excess rate for each of calculated values of the torque and angular speeds of the wheel axes of the driving wheels 22L and 22R and the pivot axis 31 of the body part 3 that have been calculated by the state calculation unit 53. The excess rate indicates how much the calculated values exceed an upper limit limitation value or a lower limit limitation value. For example, the excess rate calculation unit 54 sets the upper limit limitation value to a positive value and the lower limit limitation value to a negative value. When the calculated value is a positive value, the excess rate calculation unit 54 obtains the excess rate by calculating "the calculated value/upper limit limitation value". On the other hand, when the calculated value is a negative value, the excess rate calculation unit 54 obtains the excess rate by calculating "the calculation value/lower limit limitation value". Therefore, when the calculated value exceeds the upper limit limitation value or the lower limit limitation value, the excess rate becomes greater than 1. The excess rate calculation unit 54 outputs a maximum excess rate among the excess rates of the calculated values of the torque and angular speeds of the wheel axes of the driving wheels 22L and 22R and the pivot axis 31 of the body part 3. The upper limit limitation value and the lower limit limitation value of the torque and angular speeds of the wheel axes of the driving wheels 22L and 22R and the pivot axis 31 of the body part 3 are preset individually.

The storage determination unit 55 determines as to whether or not to store the speed command searched by the command search unit 52 and the excess rate calculated by the excess rate calculation unit 54. Specifically, the storage determination unit 55 compares the excess rate calculated by the excess rate calculation unit 54 with the excess rate stored in the minimum excess rate storage unit 56 in order to determine as to whether or not the excess rate calculated by the excess rate calculation unit 54 is the minimum among the excess rates calculated in the past by the excess rate calculation unit 54 for the speed command in the current step. As a result, when the excess rate calculated by the excess rate calculation unit 54 is the minimum, the storage determination unit 55 determines to store the speed command searched by the command search unit 52 and the excess rate calculated by the excess rate calculation unit 54.

When the storage determination unit 55 determines to store the excess rate, the minimum excess rate storage unit 56 stores the excess rate calculated by the excess rate calculation unit 54. On the other hand, when the storage determination unit 55 determines not to store the excess rate, the minimum excess rate storage unit 56 discards the excess rate calculated by the excess rate calculation unit 54.

When the storage determination unit 55 determines to store the speed command, the command storage unit 57 stores the speed command searched by the command search unit 52. On the other hand, when the storage determination unit 55 determines not to store the speed command, the command storage unit 57 discards the speed command searched by the command search unit 52.

The end determination unit 58 determines as to whether or not to end the process regarding the speed command of the current step. A method for the determination will be described later. When the end determination unit 58 determines to end the process, the end determination unit 58 instructs the command output unit 59 to output the speed command stored in the command storage unit 57. On the other hand, when the end determination unit 58 determines not to end the process, the end determination unit 58 instructs the command search unit 52 to search for another speed command(s).

In response to the instruction from the end determination unit 58, the command output unit 59 outputs the speed command stored in the command storage unit 57 to the command conversion unit 6 as the filtered speed command of the current step.

In this embodiment, regarding the speed command of the current step, the command search unit 52 searches for the predetermined number of speed commands for maintaining the translational speed direction indicated by the speed command of the current step in a single process. Alternatively, the command search unit 52 searches for the predetermined number of speed commands for maintaining the translational speed direction indicated by the speed command of the current step in each of the processes of maximum N stages (N is a natural number of two or greater).

In the following descriptions, an example will be described in which the predetermined number of speed commands are searched for maintaining, as much as possible, the translational speed direction indicated by the speed command of the current step in each of the processes of maximum N stages to maintain.

In the case where the predetermined number of speed commands are searched for in each of the processes of maximum N stages, in the processes other than the process of the Nth stage, the end determination unit 58 determines that the process will not be ended until the predetermined number of speed commands are searched for in the corresponding process. After the predetermined number of speed commands are searched for, the end determination unit 58 determines as to whether or not the excess rate stored in the minimum excess rate storage unit 56 is 1 or less. When the excess rate stored in the minimum excess rate storage unit 56 is 1 or less, it means that there is a speed command whose excess rate is 1 or less among the predetermined number of speed commands searched for in the corresponding process, and that there is a speed command closest to the target of the search stored in the command storage unit 57 among the predetermined number of speed commands. Therefore, the end determination unit 58 determines to end the process, instructs the command output unit 59 to output the speed command stored in the command storage unit 57 as the filtered speed command of the current step, and cancels the subsequent processes. On the other hand, when the excess rate stored in the minimum excess rate storage unit 56 exceeds 1, it means that there is no speed command whose excess rate is 1 or less among the predetermined number of speed commands searched for in the corresponding process. Therefore, the end determination unit 58 determines not to end the process, and proceeds to the process of the next stage.

In the process of the Nth stage, the end determination unit 58 determines not to end the process until the predetermined number of speed commands are searched for in the corresponding process. After the predetermined number of speed commands are searched for, the end determination unit 58 determines to end the process. It can be seen that the excess rate stored in the minimum excess rate storage unit 56 at this time is the minimum excess rate among the excess rates of all the speed commands searched for in the process of N stages. Therefore, the end determination unit 58 instructs the command output unit 59 to output the speed command whose excess rate is stored in the minimum excess rate storage unit 56 as the filtered speed command of the current step regardless of whether or not the excess rate is 1 or less.

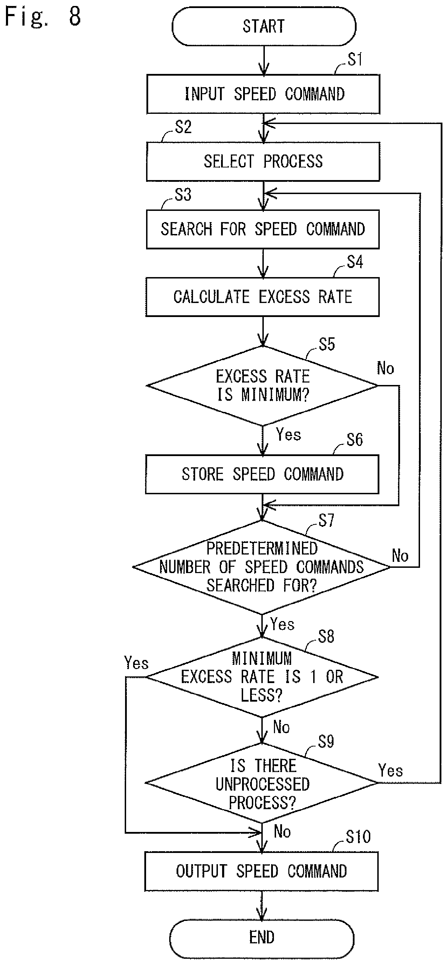

Next, a processing flow of the control unit 5 will be described with reference to Fig. 8. Fig. 8 is a flowchart showing the processing flow of the control unit 5.

Firstly, the command input unit 51 inputs the speed command periodically generated by the command generation unit 4 (Step S1).

Next, the command search unit 52 selects the process having the highest priority among the plurality of processes for searching the speed commands for maintaining the translational speed direction indicated by the speed command of the current step (Step S2). Next, the command search unit 52 searches for the speed commands for maintaining the translational speed direction indicated by the speed command of the current step in the process selected in Step S2 (Step S3).

Next, the state calculation unit 53 calculates the torque and angular speeds of the wheel axes of the driving wheels 22L and 22R and the pivot axis 31 of the body part 3 when the omnidirectional cart 1 operates in accordance with the speed command searched by the command search unit 52 in Step S3. Next, the excess rate calculation unit 54 calculates the excess rate for each of the calculated values of the torque and angular speeds of the wheel axes of the driving wheels 22L and 22R and the pivot axis 31 of the body part 3 that have been calculated by the state calculation unit 53 and outputs the maximum excess rate (Step S4). The excess rate indicates how much each of the calculated values exceed the upper limit limitation value or the lower limit limitation value.

Next, the storage determination unit 55 determines, only when the excess rate is 1 or greater, as to whether or not the excess rate calculated by the excess rate calculation unit 54 in Step S4 is the minimum among the excess rates calculated by the excess rate calculation unit 54 regarding the speed command of the current step (Step S5).

When the excess rate calculated by the excess rate calculation unit 54 is the minimum in Step S4 (Yes in Step S5), the minimum excess rate storage unit 56 stores the excess rate calculated by the excess rate calculation unit 54 in Step S4. Further, the command storage unit 57 stores the speed command searched by the command search unit 52 in Step S3 (Step S6). On the other hand, when the excess rate calculated by the excess rate calculation unit 54 is not the minimum in Step S4 (No in Step S5), the minimum excess rate storage unit 56 skips Step S6. Further, the excess rate calculation unit 54 does not store and discards the excess rate calculated by the excess rate calculation unit 54 in Step S4. Furthermore, the command storage unit 57 does not store and discards the speed command searched by the command search unit 52 in Step S3.

Next, the end determination unit 58 determines as to whether or not the predetermined number of speed commands have been searched for by the command search unit 52 in the process selected by the command search unit 52 in Step S2 (Step S7).

When the predetermined number of speed commands have not been searched for in the process selected by the command search unit 52 in Step S2 (No in Step S7), the flow returns to Step S3 in order to search for another speed command(s). On the other hand, when the predetermined number of speed commands have been searched for in the process selected by the command search unit 52 in Step S2 (Yes in Step S7), the end determination unit 58 determines as to whether or not the minimum excess rate stored in the minimum excess rate storage unit 56 is 1 or less (Step S8).

When the minimum excess rate stored in the minimum excess rate storage unit 56 is 1 or less (Yes in Step S8), the end determination unit 58 determines to end the process regarding the speed command of the current step, and the command output unit 59 outputs, to the command conversion unit 6, the command stored in the command storage unit 57 at that time as the filtered speed command of the current step (Step S10). Then, the process is ended.

When the minimum excess rate stored in the minimum excess rate storage unit 56 is not 1 or less (No in Step S8), the end determination unit 58 determines as to whether or not there is an unprocessed process in the plurality of processes (Step S9). When there is an unprocessed process (Yes in Step S9), the flow returns to Step S2 in order to select the process with the highest priority among the unprocessed processes.

When there is no unprocessed process (No in Step S9), the end determination unit 58 determines to end the process regarding the speed command of the current step, and the command output unit 59 outputs, to the command conversion unit 6, the speed command stored in the command storage unit 57 stored at that time as the filtered speed command of the current step (Step S10). Then, the process is ended. That is, in this case, the speed command whose excess rate is greater than 1 is output to the command conversion unit 6.

When the processes regarding the speed command of the current step is ended, the control unit 5 discards the minimum excess rate and the speed command stored in the minimum excess rate storage unit 56 and the command storage unit 57, respectively. Then, the control unit 5 waits for an input of the speed command in the next step. When the speed command of the next step is input, the processes of Fig. 8 are executed.

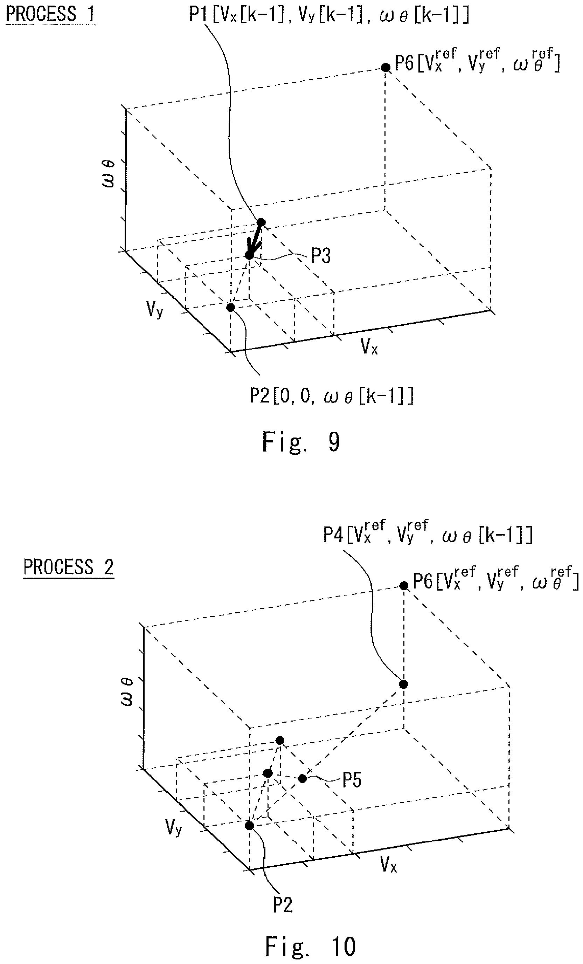

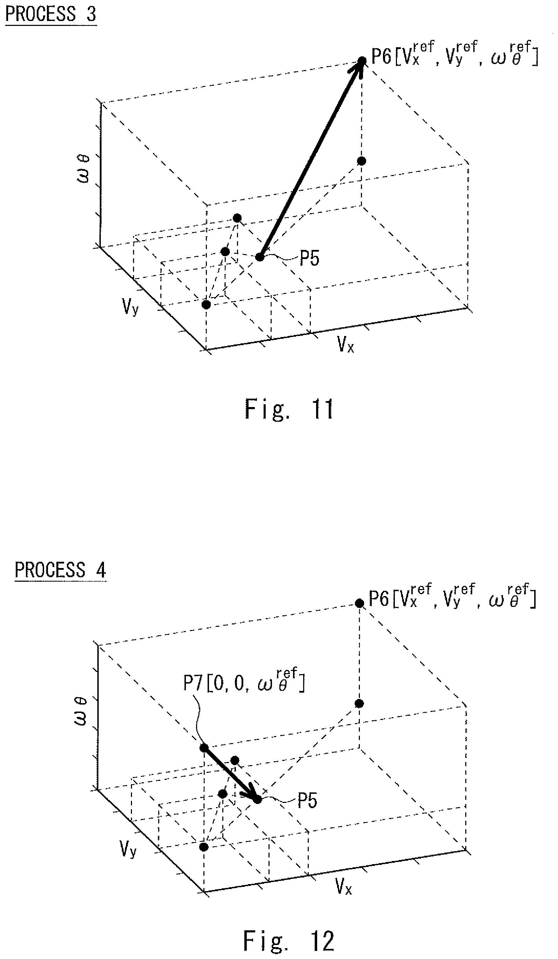

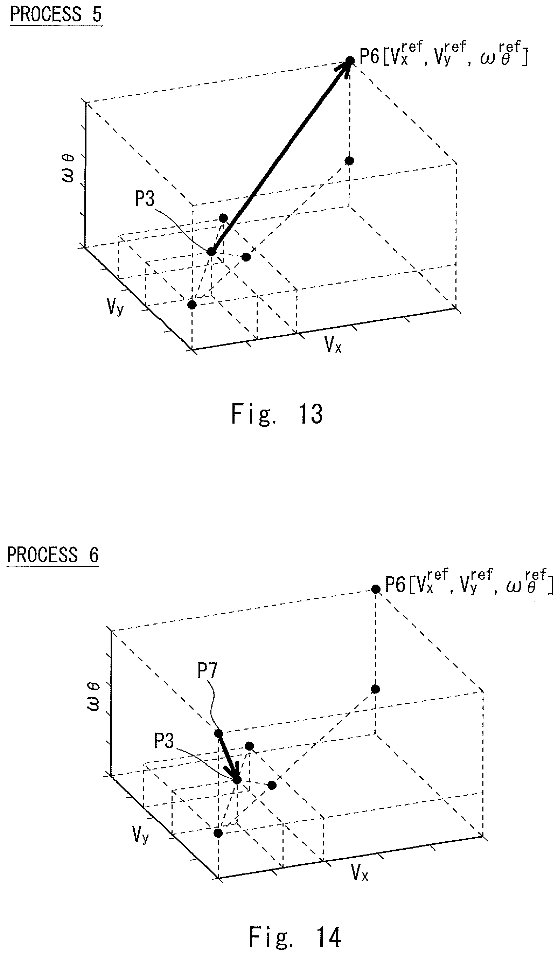

Next, the processes of the control unit 5 will be described in detail with reference to Fig. 9 to Fig. 14. Figs. 9 to 14 are diagrams showing specific processes of the control unit 5. Figs. 9 to 14 are three-dimensional coordinate system with three orthogonal axes in which Vₓ and V_{y} are X-axis and Y-axis, respectively, and ω_{θ} is a Z-axis. Here, Vₓ and V_{y} are decomposed translational speed of the body part 3 in X and Y directions, respectively. Further, ω_{θ} represents a rotational speed of the body part 3.
(1) Process 1 (Fig. 9):
   When the speed command [Vₓ^{ref}, V_{y}^{ref}, ω_{θ}^{ref}] of the current step generated by the command generation unit 4 is input to the command input unit 51, the command search unit 52 sets a point corresponding to the filtered speed command of the previous step [Vₓ[k-1], V_{y}[k-1], ω_{θ}[k-1]] as a point P1, and sets a point at which the translational speed indicated by the filter speed command of the previous step [0, 0, ω_{θ}[k-1]] is zero as a point P2. Then, the command search unit 52 searches for a point P3 (a first base point) on a straight line connecting the point P1 to the point P2 as indicated by the arrow in Fig. 9. The point P3 is a point in which the torque and angular speeds of the wheel axes of the driving wheels 22L and 22R and the pivot axis 31 satisfy the upper limit limitation value and the lower limit limitation value (i.e., within the range of the upper limit limitation value and the lower limit limitation value). This point P3 corresponds to a speed command in which the translational speed indicated by the filtered speed command of the previous step is decelerated. At this time, the command search unit 52 calculates the torque and angular speeds using the state calculation unit 53. After the command search unit 52 finds the point P3, the flow proceeds to the next process 2.
      Note that the command search unit 52 searches for the above-described point P3 when one of the angular speeds ω_{_}L and ω_R of the wheel axes of the driving wheels 22L and 22R, respectively, in a case where the omnidirectional cart 1 operates in accordance with the filtered speed command of the previous step, exceeds n% of the upper limit limitation value or the lower limit limitation value (n is an arbitrary number less than 100 and close to 100, for example, n=99). On the other hand, when any one of the angular speeds ω_L and ω_R of the wheel axes of the driving wheels 22L and 22R, respectively, in a case where the omnidirectional cart 1 operates in accordance with the filtered speed command of the previous step, does not exceed n% of the upper limit limitation value or the lower limit limitation value, the command search unit 52 uses the point P1 as the point P3. Then, the flow proceeds to the next process 2.
      Further, in the search for the point P3, when there is no point P3 satisfying the upper and lower limit limitation values, the command search unit 52 uses a value obtained by multiplying Vₓ[k-1] and V_{y}[k-1] of the point P1 by m (m is an arbitrary number less than 1 and close to 1, for example, m=0.998) as the point P3. Then, the flow proceeds to the next process 2.
(2) Process 2 (Fig. 10):
   Next, the command search unit 52 sets a point [Vₓ^{ref}, V_{y}^{ref}, ω_{θ}[k-1]] obtained by replacing the rotational speed indicated by the speed command of the current step with the rotational speed indicated by the filtered speed command of the previous step as a point P4 . Then, the command search unit 52 sets a point closest to the point P3 on the straight line connecting the point P2 to the point P4 as a point P5 (a second base point). This point P5 is a point, when the translational speed direction indicated by the speed command of the current step is maintained, corresponding to the speed command in which the translational speed is the closest to the translational speed indicated by the speed command of the previous step.
      After that, the command search unit 52 sequentially selects the four processes 3 to 6 (the first to fourth processes), and searches for the predetermined number of speed commands in each of the selected processes. In this case, it is assumed that the priorities of the processes 3 to 6 are specified in this order (i.e., the priority of process 3 is the highest).
(3) Process 3 (Fig. 11):
   The process 3 is a process for searching for the speed command, giving priority to moving at the translational speed indicated by the speed command of the current step in the translational speed direction indicated by the speed command of the current step. The command search unit 52 sets a point corresponding to the speed command [Vx^{ref}, V_{y}^{ref}, ω_{θ}^{ref}] of the current step as a point P6. Then, the command search unit 52 searches for the predetermined number of speed commands by the bisection method on a straight line connecting the point P5 to the point P6 in the direction of the arrow shown in Fig. 11. At this time, every time the speed command is searched for, Steps S4 to S6 of Fig. 8 are performed.
      When the search for the predetermined number of speed commands is completed, the end determination unit 58 determines as to whether or not the minimum excess rate stored in the minimum excess rate storage unit 56 is 1 or less. When the minimum excess rate is 1 or less, the command output unit 59 outputs, to the command conversion unit 6, the speed command stored in the command storage unit 57 at that time as the filtered speed command [Vₓ[k], V_{y}[k], ω_{θ}[k]] of the current step. Then, the process is ended. On the other hand, when the minimum excess rate is greater than 1, the flow proceeds to process 4.
(4) Process 4 (Fig. 12):
   The process 4 is a process for searching for the speed command, giving priority to decelerating the translational speed indicated by the speed command of the current step, while the omnidirectional cart 1 moves in the translational speed direction indicated by the speed command of the current step. The command search unit 52 sets a point [0, 0, ω_{θ}^{ref}] at which the translational speed in the speed command of the current step is zero as a point P7. Then, the command search unit 52 searches for the predetermined number of speed commands by the line search method on the straight line connecting the point P7 to the point P5 in the direction of the arrow shown in Fig. 12. At this time, every time the speed command is searched for, Steps S4 to S6 of Fig. 8 are performed.
      When the search for the predetermined number of speed commands is completed, the end determination unit 58 determines as to whether or not the minimum excess rate stored in the minimum excess rate storage unit 56 is 1 or less. When the minimum excess rate is 1 or less, the command output unit 59 outputs, to the command conversion unit 6, the speed command stored in the command storage unit 57 at that time as the filtered speed command [V_{x[}k], V_{y}[k], ω_{θ}[k]] of the current step. Then, the process is ended. On the other hand, when the minimum excess rate is greater than 1, the flow proceeds to the process 5.
(5) Process 5 (Fig. 13):
   The process 5 is a process for searching for the speed command, giving priority to moving at the translational speed indicated by the speed command of the current step in the direction of the translational speed in the speed command of the current step. However, the process 5 allows the omnidirectional cart 1 to approach the translational speed direction indicated by the filtered speed command of the previous step. The command search unit 52 searches for the predetermined number of speed commands by the bisection method on a straight line connecting the point P3 to the point P6 in the direction of the arrow shown in Fig. 13. At this time, every time the speed command is searched for, Steps S4 to S6 of Fig. 8 are performed.
      When the search for the predetermined number of speed commands is completed, the end determination unit 58 determines as to whether or not the minimum excess rate stored in the minimum excess rate storage unit 56 is 1 or less. When the minimum excess rate is 1 or less, the command output unit 59 outputs, to the command conversion unit 6, the speed command stored in the command storage unit 57 at that time as the filtered speed command [Vₓ[k], V_{y}[k], ω_{θ}[k]] of the current step. Then, the process is ended. On the other hand, when the minimum excess rate is greater than 1, the flow proceeds to the process 6.
(6) Process 6 (Fig. 14):
   The process 6 is a process for searching for the speed command, giving priority to decelerating the translational speed indicated by the speed command of the current step, while the omnidirectional cart 1 moves in the translational speed direction indicated by the speed command of the current step. However, the process 6 allows the omnidirectional cart 1 to approach the translational speed direction indicated by the filtered speed command of the previous step. The command search unit 52 searches for the predetermined number of speed commands by the line search method on the straight line connecting the point P7 to the point P3 in the direction of the arrow shown in Fig. 14. At this time, every time the speed command is searched for, Steps S4 to S6 of Fig. 8 are performed.

When the search for the predetermined number of speed commands is completed, the command output unit 59 outputs, to the command conversion unit 6, the speed command stored in the command storage unit 57 at that time as the filtered speed command [V_{x[}k], V_{y}[k], ω_{θ}[k]] of the current step. Then, the process is ended.

As described above, according to the omnidirectional cart 1 of this embodiment, the control unit 5 searches for the predetermined number of speed commands for maintaining the translational speed direction indicated by the speed command of the current step. Then, the control unit 5 calculates the speed command whose excess rate is the threshold or less or the speed command with the minimum excess rate as the filtered speed command of the current step. The excess rate indicates how much the values of the torque and angular speeds of wheel axes of the driving wheels and the pivot axis exceed limitation values.

Therefore, it is possible to maintain, as much as possible, the translational speed direction indicated by the speed command of the current step and also to drive the wheel axes of the driving wheels and the pivot axis in accordance with the filtered speed command that takes the limitation values into consideration. Further, there is no need to reduce the translational speed of the body part more than necessary. Accordingly, it is possible to achieve both prevention of a difference between the translational speed direction of the omnidirectional cart and the translational speed direction indicated by the speed command of the current step and an increase in the translational speed

In addition, since the wheel axes of the driving wheels and the pivot axis can be driven in accordance with the filtered speed command that takes the limitation values into consideration, it is possible to prevent excessive torque from being generated in the wheel axes of the driving wheels. It is thus possible to prevent wheel slip from occurring.

Moreover, since the wheel axes of the driving wheels and the pivot axis can be driven in accordance with the filtered speed command while maintaining, as much as possible, the translational speed direction indicated by the speed command of the current step, when the command generation unit is composed of an operation unit such as a joystick or the like, it is possible to reduce an unnatural impression of the user receives when he/she operates the operation unit.

Note that the present invention is not limited to the above embodiment, and modifications can be made as appropriate without departing from the scope thereof. For example, although the number of the driving wheel is two in the above embodiment, it may be three or more.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

An omnidirectional cart including a cart part including a plurality of driving wheels, a body part attached to the cart part rotatably around a pivot axis, a command generation unit generates a speed command indicating a translational speed and a rotational speed of the body part at predetermined cycles, and a control unit searches for a predetermined number of the speed commands for maintaining a translational speed direction indicated by the speed command of a current step and calculates a speed command whose excess rate is a threshold or less or a speed command whose excess rate is minimum among the predetermined number of the speed commands, the excess rate indicating how much values of torque and angular speeds of wheel axes of the plurality of driving wheels and the pivot axis exceed limitation values when the omnidirectional cart operates in accordance with the speed command of the current step.

## Claims

1. An omnidirectional cart (1) comprising:
a cart part (2) including a plurality of driving wheels (22L, 22R);
a body part (3) attached to the cart part (2) rotatably around a pivot axis (31);
a command generation unit (4) configured to generate a speed command at predetermined cycles, the speed command indicating a translational speed and a rotational speed of the body part (3);
a control unit (5) configured to, when the speed command of a current step is generated by the command generation unit (4), search for a predetermined number of the speed commands for maintaining a translational speed direction indicated by the generated speed command of the current step and calculate the speed command whose excess rate is a threshold or less or the speed command whose excess rate is minimum among the predetermined number of the speed commands searched for as filtered speed commands of the current step, the excess rate indicating how much values of torque and angular speeds of wheel axes of the plurality of driving wheels (22L, 22R) and the pivot axis (31) exceed limitation values when the omnidirectional cart (1) operates in accordance with the speed command of the current step;
a first driving unit (7L, 7R) configured to drive rotations of the wheel axes of the plurality of driving wheels (22L, 22R) independently based on the filtered speed command of the current step calculated by the control unit (5); and
a second driving unit (8) configured to drive rotation of the pivot axis (31) based on the filtered speed command of the current step calculated by the control unit (5).

2. The omnidirectional cart according to Claim 1, wherein
regarding the speed command of the current step, the control unit (5) searches for the predetermined number of the speed commands in each of processes of maximum N stages (N is a natural number of 2 or greater),
in each of the processes other than the Nth stage, when there is the speed command whose excess rate is the threshold or less among the predetermined number of the speed commands searched for in the process, the control unit (5) calculates the speed command as the filtered speed command of the current step and cancels the subsequent processes, while when there is no speed command whose excess rate is the threshold or less, the control unit (5) proceeds to the process of a next stage, and
in the process of the Nth stage, the control unit (5) calculates the speed command whose excess rate is minimum among all the speed commands searched for in the process of the N stage as the filtered speed command of the current step.

3. The omnidirectional cart according to Claim 2, wherein
the control unit (5) executes a first process as the process other than the Nth stage, and in the first process,
in a three-dimensional coordinate system with three orthogonal axes, which are an X-axis, a Y-axis, and a Z-axis, where the X-axis and the Y-axis are obtained by decomposing the translational speed of the body part (3) into an X direction and a Y direction, respectively, and the Z-axis represents the rotational speed of the body part (3), a point corresponding to the filtered speed command of a previous step or a point at which the translational speed indicated by the filtered speed command of the previous step is decelerated is set as a first base point,
in the three-dimensional coordinate system, a point closest to the first base point among points on a straight line connecting a point at which the translational speed indicated by the filtered speed command of the previous step is zero to a point at which the rotational speed indicated by the speed command of the current step is replaced with the rotational speed indicated by the filtered speed command of the previous step is set as a second base point, and
in the three-dimensional coordinate system, the predetermined number of points on a straight line connecting the point corresponding to the speed command of the current step to the second base point are searched for as the predetermined number of the speed commands.

4. The omnidirectional cart according to Claim 3, wherein
the control unit (5) executes a second process in a next stage of the first process as the process other than the Nth stage, and
in the second process, in the three dimensional coordinate system, the control unit (5) searches for the predetermined number of the points on a straight line connecting a point at which the translational speed indicated by the speed command of the current step is zero to the second base point as the predetermined number of the speed commands.

5. The omnidirectional cart according to Claim 4, wherein
the control unit (5) executes a third process in a next stage of the second process as the process other than the Nth stage, and
in the third process, in the three-dimensional coordinate system, the control unit (5) searches for the predetermined number of the points on a straight line connecting the point corresponding to the speed command of the current step to the first base point as the predetermined number of the speed commands.

6. The omnidirectional cart according to Claim 5, wherein
the control unit (5) executes a fourth process in a next stage of the third process as the process of the Nth stage, and
in the fourth process, in the three-dimensional coordinate system, the control unit (5) searches for the predetermined number of the points on a straight line connecting the point at which the translational speed indicated by the speed command of the current step is zero to the first base point as the predetermined number of the speed commands.

7. A control method of an omnidirectional cart (1) comprising a cart part (2) including a plurality of driving wheels (22L, 22R) and a body part (3) attached to the cart part (2) rotatably around a pivot axis (31), the control method comprising
generating a speed command at predetermined cycles, the speed command indicating a translational speed and a rotational speed of the body part (3);
when the speed command of a current step is generated, searching for a predetermined number of the speed commands for maintaining a translational speed direction indicated by the generated speed command of the current step and calculating the speed command whose excess rate is a threshold or less or the speed command whose excess rate is minimum among the predetermined number of the speed commands searched for as filtered speed commands of the current step, the excess rate indicating how much values of torque and angular speeds of wheel axes of the plurality of driving wheels (22L, 22R) and the pivot axis (31) exceed limitation values when the omnidirectional cart (1) operates in accordance with the speed command of the current step;
driving rotations of the wheel axes of the plurality of driving wheels (22L, 22R) independently based on the calculated filtered speed command of the current step; and
driving rotation of the pivot axis (31) based on the calculated filtered speed command of the current step.
